# EUROPEAN PATENT APPLICATION

(11) **EP 1 376 491 A1**
(43) Date of publication of application: **02.01.2004**
(21) Application number: 03076897.2
(22) Date of filing: 18.06.2003
(51) Int. Cl.: G07F 7/00, G07F 17/24, G07B 15/04, G06F 3/14, G09F 27/00

(54) **Parking space management**

(30) Priority: 19.06.2002 NL 1020900; 15.10.2002 NL 1021657
(71) Applicant: WPS Parking Systems B.V., 5652 AW Eindhoven (NL)
(72) Inventor: Smulders, Henricus Cornelus Gerardus Maria, 5652 AW Eindhoven (NL)
(74) Representative: De Hoop, Eric

(57) **Abstract**

The invention relates to a device for checking in and checking out the occupation of a parking space by a parker, comprising a stationary housing, provided with input means for entering data by the parker, and transmission means for wireless transmission of these data to a central data processing unit.

As a result parking management and payment of the parking time is possible in a simple manner.

The invention further relates to a parking meter assembly for a car park for vehicles comprising at least one entrance for vehicles and at least one exit for vehicles.

## Description

The invention relates to a device for checking in and checking out a parking space by a parker, an assembly for parking space management comprising such a device, and a method for parking space management.

In EP-A1-1172767 a parking space system is described in which a parker contacts a central data file by means of a WAP telephone via the internet. Via a personal code the parker is able to check in and out for a parking space. The bill follows electronically or can be paid by means of the telephone bill. A user can also look for free parking spaces.

In DE-U-295 17347 a parking meter is described provided with means for paying electronically, for instance with a chip card. The parking meter can be equipped with a receipt printing device and means for entering the desired parking time. In one embodiment the parking meter can furthermore be equipped with means for wireless communication with a centre.

US patent specification US-A-5.966.345 describes a module which can be mounted onto a conventional parking meter, having a dial indicating the parking time and the time lapsed. The dial remains visible after mounting. The module is provided with a sensor to detect the presence of a parked vehicle. The module is equipped with a transmitter to transmit data to a central system when the parking time is exceeded. The module only fits around an existing parking meter.

European patent application EP-A1-0980055 describes a "wireless" parking meter provided with vehicle detection means consisting of an optical transmitter and receiver, means to pay with coins or by electronic means, and radio means to let the parking meter contact a central management system. Such a system is complex because it regards a completely new infrastructure, particularly completely new parking meters.

The present invention intends to overcome the said drawbacks at least partially. In addition it is an object of the present invention to provide means for managing parking spaces, which can be generally applied. The invention to that end provides a device for checking in and checking out the occupation of a parking space by a parker, comprising a stationary housing, provided with input means for entering data by the parker, and transmission means for wireless transmission of these data to a central data processing unit.

The invention furthermore provides an assembly for parking space management, comprising devices according to the invention, and a central data processing device provided with receiving means for receiving data transmitted by the devices, a data file provided with a data field for each parking space present for a unique parking space indication and a data field for an indication with each parking space whether it is free or occupied, as well as software for mutating the data file by entering the data in the data file.

The invention further provides a method for managing parking spaces, in which a parker when starting his parking time enters an identification code in a device according to the invention, and transmits the identification code together with a parking space code to a central data processing authority.

By means of the device, method and assembly according to the invention it becomes possible to manage the parking spaces centrally, without existing meters and infrastructure having to be adapted, and without a parker having to have special means at his disposal, such as (special) mobile telephones, codes or the like. Using the parking meters in a conventional manner remains possible.

Specific embodiments have been described in the attached depending claims.

Which method consists of the use of a small-sized registration and communication device that is mounted on any given existing parking meter.

An embodiment of the present registration and communication device is arranged near any given existing parking meter, such as a lamppost or the like situated near the parking meter.

The advantage of the method according to the invention is that the costly integration of the device in an existing parking meter or mounting it in a newly to be manufactured parking meter is avoided and that the registration and communication device can be cheaply manufactured and in mass production.

A parker who does not have a registration carrier at his disposal by means of which he is able to pass on his data to the centre, can still pay with coins.

For carrying out the method according to the invention a small-sized registration and communication device is suggested, consisting of a housing containing known registration means and known means for passing on the registered information to a central data processing authority, such as for instance the municipality in which the parking meter is situated.

The invention furthermore relates to a parking meter assembly for a car park for vehicles comprising at least one entrance for vehicles and at least one exit for vehicles.

From DE-A1-19731042 a parking meter is known provided with a changeable window having an advertisement picture. However when the advertisement changes or another advertisement has to be displayed, the entire picture has to be replaced.

Furthermore registration systems for car parks are known where a driver of a vehicle receives a ticket by pressing a button. Prior to leaving the car park the parking fee has to be paid first, after which the driver with vehicle is able to leave the car park by means of the ticket. Such an entrance check is also possible by means of a badge that is electronically checked when entering and when leaving the car park.

A drawback of these systems is that is not possible to give the driver of a vehicle information that may be relevant to him.

It is an object of the invention to at least partially overcome said drawbacks.

To that end this invention provides a parking meter assembly for a car park for vehicles comprising at least one entrance for vehicles and at least one exit for vehicles, the parking meter assembly comprising:
- a first display device at a first entrance;
- a second display device at a first exit;
- first input means for entering data when a vehicle enters at the first entrance;
- second input means for entering data when leaving the car park at the first exit;
- a central computer provided with a memory having a data file with a number of data units and software for selecting a data unit and selectively displaying the data unit at at least one of the display devices;
the display devices being in contact with the central computer, the first and second input means being connected to the central computer, and the software comprising a processing routine for storing the data that have been entered by means of the input means.

By connecting display devices and input means to each other via a central computer in this way, it is possible to inform drivers of vehicles when entering and when leaving the car park about matters that might be of interest or importance to the driver. Said information may moreover be particularly focused on the driver in question.

Further embodiments of the parking meter assembly according to the invention are among others described in the depending claims.

For instance in one embodiment of the parking meter assembly according to the invention, the software may select a data unit based on a selection criterion. In this way it is possible to select and display information particularly focused on a driver. In an embodiment thereof the processing routine determines the selection criterion from the data that have been entered by means of the input means. For instance data could have been read from a chip card of a subscription ticket-holder. It might also be the simple fact that a so-called "short-term parker" takes a ticket via the push button.

In an embodiment of the parking meter assembly according to the invention the display devices are display screens, preferably display screens on which graphical information, pictures, for instance advertisements, or even moving images or video can be displayed.

For a simple implementation, for instance in existing situations, the display means are connected to the central computer via wireless means.

In a further embodiment the data units are images, particularly advertisements, or other means of advertising.

The invention further relates to a method for displaying data on a parking meter assembly as described above, wherein when a vehicle enters the car park via the first entrance the entering vehicle is identified by means of the first input means, the central computer selects a data unit based on the identification, and displays said data unit on the first display device. In this way a parking device, for instance a car park or parking lot can have remote management. It may even become possible to manage several parking lots or car parks from a centre.

In one embodiment of the method, when leaving the car park via the first exit, the leaving vehicle is identified by means of the second input means, the central computer selects a data unit based on the identification and said data unit is displayed on the second display device.

The invention will be further elucidated on the basis of an exemplary embodiment of a device and assembly according to the inventions, in which:
Figure 1 shows a conventional parking meter provided with a device according to the invention;
Figure 2 shows a schematic overview of an assembly according to the invention;
Figure 3 shows a diagram of a parking meter assembly according to the other aspect of the invention.

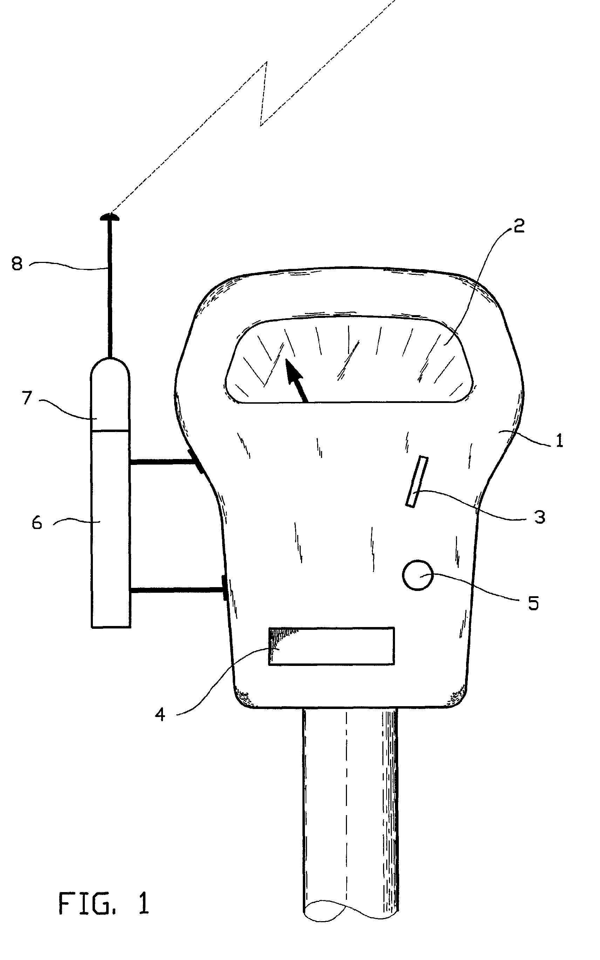

Figure 1 shows a known parking meter 1 which is provided with a usual indication means 2 for the parking time, a slot 3 for inserting coins, a slot 4 for issuing a receipt and a usual operation button 5.

The known parking meter 1 is provided with the device 6, a registration and communication device, according to the invention, provided with a data input 7, here a slot for receiving a registration carrier which may for instance be provided with the registration number of the parked vehicle, which is also known in a central data processing system and, for instance has been checked in through subscription by the owner of the vehicle.

By means of antenna 8 the parking data can be transmitted wireless, preferably radiographically, to a central data processing device. The registration and communication device 6 according to the invention may also be mounted on a lamppost or the like situated near the parking meter 1. When checking out the vehicle the parker only needs to insert his registration carrier into the slot 7 again. A car-park attendant may establish with known means whether the vehicle has been checked in. The parker receives for instance a monthly bill to pay the established parking fees, from the manager of the central data processing system.

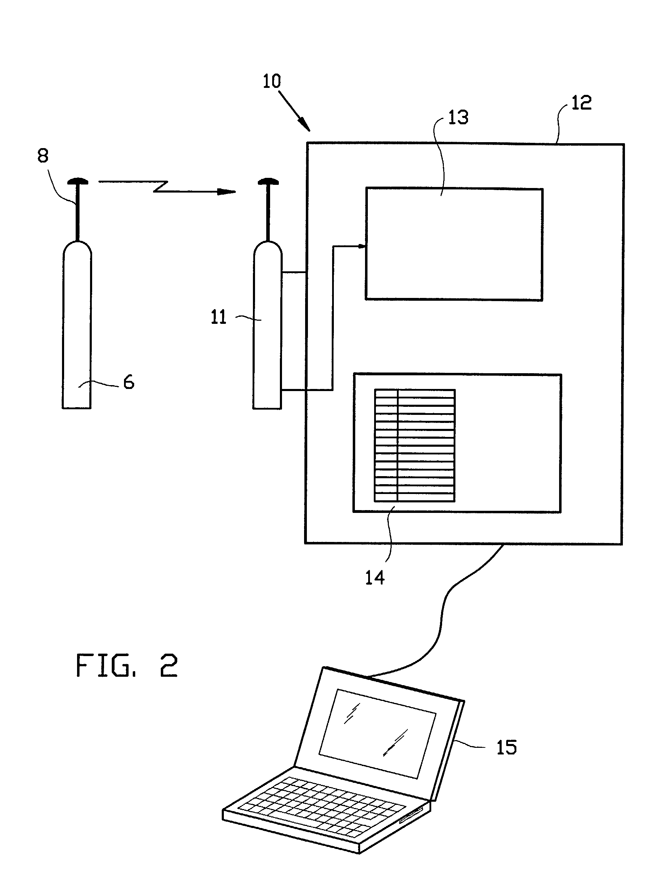

Figure 2 schematically shows an exemplary embodiment of an assembly according to the invention. In the figure a device 6 described earlier has been shown, as well as a central processing device 10.

The central processing device is provided with a receiver 11 for the data transmitted by the device 6. The receiver 11 is connected to a data processing unit 12 provided with a memory 13 for storing the data, and a memory 14 for storing a data file of all parking spaces with per parking space a data field for a unique parking space indication and a data field for indicating whether or not a parking space is free. The central processing unit is furthermore provided with software which, at receipt of the data via the receiver 11, processes said data in the data file 14, or updates the data file (or preferably database).

The central data processing unit 12 can be connected to known data input or display means, here symbolically indicated with a notebook computer. Of course the data processing unit 12 may be connected to the internet or a LAN or the like, as a result of which the data can be consulted by a parking manager or parkers.

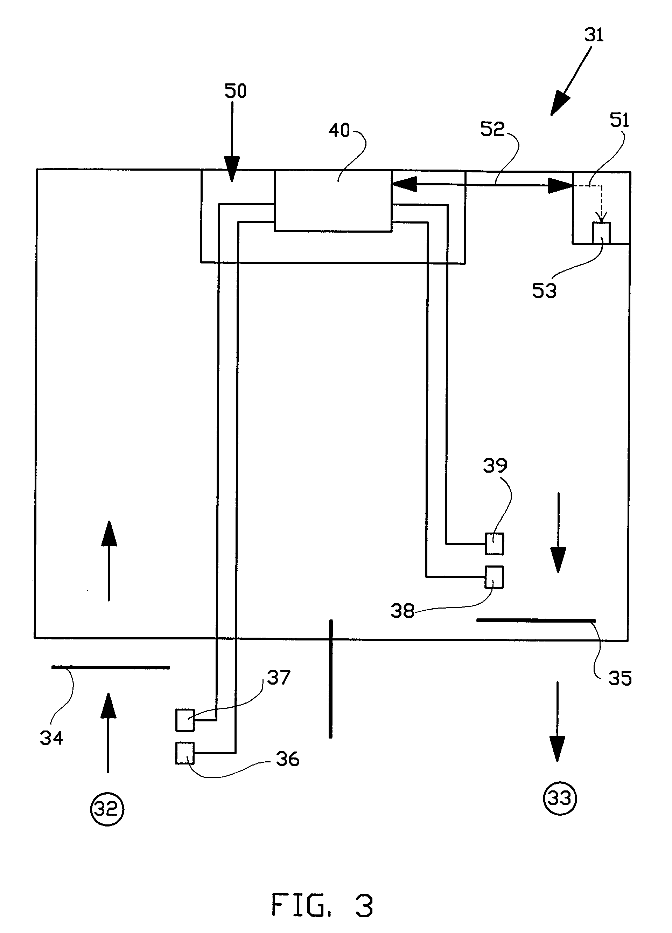

Figure 3 shows a diagram of an embodiment of a parking meter assembly according to the invention. A car park 31 is provided with an entrance 32 and an exit 33 for vehicles. Both the entrance 32 and the exit 33 are provided with a barrier 34, 35.

When entering the car park the driver of a vehicle inserts an entry ticket into the input device 36. The device may also be provided with an activation means, for instance a push button, with which a client, a so-called "short-term parker", is able to obtain a ticket from the device. At the entrance a display device 37 has also been positioned. The display device and the input device can be integrated into one single console. It is also possible that the display device is positioned above the entrance. In any case at such a position where a driver can read it well. In case the driver has been identified as a "short-term parker" the display device 37 can display a general message.

The display device 37 can be a simple display screen to show textual information. Preferably however, it regards a colour display screen, on which images, and if so desired even short picture extracts, can be displayed.

The input device 36 may be a keyboard with which a driver is able to enter data. Preferably, however, it regards a card reading unit or similar equipment.

A display device 38 and an input device 39 have also been positioned at the exit 33. Said devices may be identical to the devices 36 and 37 at the entrance 32.

The display devices 37 and 38 and the input devices 36 and 39 are connected to a central computer 40, preferably positioned in a centre, for instance in a car park, but outside of it is also possible. It is possible that the centre and the central computer service several car parks or parking locations. The central computer 40 may electronically or optically or via wireless means be connected to the other parts of the parking assembly according to the invention.

The central computer 40 may be provided with software as described above in the previous figures. In this way a driver may for instance be told where there are free parking spaces and after the parking time has ended payment can take place.

The parking assembly according to this aspect of the invention may in a further embodiment, also schematically shown in figure 3, be provided with a payment device 51. In the payment device a similar display device 53 has been arranged as in the other parts of the parking meter assembly according to the invention. The display device is also connected to the central computer 40. Additionally the payment device 51 can be provided with a camera 53. By means of said camera images, for instance of a client who wants to pay, can be recorded and displayed at the centre 50. Additionally a sound connection can be present for communication with a manager at the centre 50. On the display device 53 images can also be displayed of the manager at the centre 50, so that a direct visual connection and sound connection is possible between a client and a manager at a centre 50. The visual and the sound connection may for instance run via the data connection 52 via the central computer 40. As a result an integrated assembly is possible that is easy to fit in, also in existing situations.

It will be clear that the above description is included to illustrate the operation of preferred embodiments of the invention, and not to limit the scope of the invention. The scope of the invention is only limited by the claims below. Starting from the above explanation, many variations that fall within the intention and the scope of the present invention will be evident to an expert.

## Claims

1. Device for checking in and checking out the occupation of a parking space by a parker, comprising a stationary housing, provided with input means for entering data by the parker, and transmission means for wireless transmission of these data to a central data processing unit.

2. Device according to claim 1, the device being dedicated to predetermined parking spaces.

3. Device according to claim 2, the device being dedicated to one parking space.

4. Device according to any one of the preceding claims, the housing being provided with attachment means for attaching the housing to street furniture, such as a parking meter, lamppost or the like.

5. Device according to claim 4, the attachment means being adapted for attaching the device to street furniture.

6. Device according to claim 4 or 5, the attachment means being adapted for attachment to a substantially vertical surface.

7. Device according to any one of the preceding claims, said device being mounted near an existing parking meter, preferably within a radius of some meters.

8. Device according to any one of the preceding claims, **characterized in that** the device has been provided with attachment means adapted for mounting the device to the side of an existing parking meter, the other operation means of the parking meter remaining free.

9. Device according to one of the preceding claims, the input means comprising a reading unit for an identification means, such as for instance a chip card or a magnetic stripe card.

10. Device according to claim 9, the reading unit generating a unique code for the parker and transmitting said code as a part of the data.

11. Device according to any one of the preceding claims, furthermore provided with memory means for storing a unique code which identifies the device, and the transmission means being adapted for retrieving said code and transmitting it together with the data entered by the parker to the central data processing unit.

12. Assembly for parking space management, comprising devices according to any one of the preceding claims, and a central data processing device provided with receiving means for receiving data transmitted by the devices, a data file provided with a data field for each parking space present for a unique parking space indication and a data field for an indication with each parking space whether it is free or occupied, as well as software for mutating the data file by entering the data in the data file.

13. Assembly according to claim 12, the data file further comprising a field for remaining parking time.

14. Method for managing parking spaces, in which a parker when starting his parking time enters an identification code in a device according to any one of the preceding claims 1-10, and transmits the identification code together with a parking space code to a central data processing authority.

15. Method according to claim 14, the parker when ending the parking time entering the identification code into the device and transmitting it with the parking space code.

16. Method according to claim 13-15, **characterized in that** the parker activates the device by means of an identification means, for instance a chip card or magnetic card.

17. Method according to claim 16, the device after activation transmitting a time code, unique parking space code and parker code, derived from the identification means, as part of the data.

18. Parking meter assembly for a car park for vehicles comprising at least one entrance for vehicles and at least one exit for vehicles, the parking meter assembly comprising:
- a first display device at a first entrance;
- a second display device at a first exit;
- first input means for entering data when a vehicle enters at the first entrance;
- second input means for entering data when leaving the car park at the first exit;
- a central computer provided with a memory having a data file with a number of data units and software for selecting a data unit and selectively displaying the data unit at at least one of the display devices;
the display devices being in contact with the central computer, the first and second input means being connected to the central computer, and the software comprising a processing routine for storing the data that have been entered by means of the input means.

19. Parking meter assembly according to claim 18, the software selecting a data unit based on a selection criterion, the processing routine preferably determining the selection criterion from the data that have been entered by means of the input means.

20. Parking meter assembly according to one or more of the preceding claims 18-19, the display devices being display screens.

21. Parking meter assembly according to one or more of the preceding claims 18-20, the display means being connected to the central computer by means of wireless means.

22. Parking meter assembly according to one or more of the preceding claims 18-21, the data units being images, particularly advertisements.

23. Method for displaying data on a parking meter assembly according to any one of the preceding claims 18-22, wherein when a vehicle enters the car park via the first entrance the entering vehicle is identified by means of the first input means, the central computer selects a data unit based on the identification, and displays said data unit on the first display device.

24. Method according to claim 23, wherein when leaving the car park via the first exit the leaving vehicle is identified by means of the second input means, the central computer selects a data unit based on the identification and displays said data unit on the second display device.

25. Device comprising one or more of the **characterizing** measures described in the description and/or shown in the drawings.

26. Method comprising one or more of the **characterizing** measures described in the description and/or shown in the drawings.
